# EUROPÄISCHE PATENTSCHRIFT

(11) **EP 4 322 283 B1**
(45) Veröffentlichungstag und Bekanntmachung des Hinweises auf die Patenterteilung: **18.12.2024**
(21) Anmeldenummer: 22189740.8
(22) Anmeldetag: 10.08.2022
(51) Int. Cl.: H01M 10/54

(54) **MOBILE VORRICHTUNG ZUR BEHANDLUNG VON LITHIUM-IONEN-AKKUMULATOREN UND VERFAHREN ZUR BEHANDLUNG VON LITHIUM-IONEN-AKKUMULATOREN**
MOBILE DEVICE FOR TREATING LITHIUM-ION BATTERIES AND METHOD FOR TREATING LITHIUM-ION BATTERIES
DISPOSITIF MOBILE DE TRAITEMENT DES ACCUMULATEURS LITHIUM-ION ET PROCÉDÉ DE TRAITEMENT DES ACCUMULATEURS LITHIUM-ION

(43) Veröffentlichungstag der Anmeldung: 14.02.2024
(73) Patentinhaber: RIEDHAMMER GMBH, 90411 Nürnberg (DE)
(72) Erfinder: UHL, Matthias, 91484 Sugenheim/Ullstadt (DE); BIRD, Dennis, 91358 Kunreuth (DE)
(74) Vertreter: Berkenbrink, Kai-Oliver

(56) Entgegenhaltungen:
- EP-A1- 3 517 641
- DE-A1- 102015 207 843

## Beschreibung

Die Erfindung betrifft eine mobile Vorrichtung zur Behandlung von Lithium-Ionen-Akkumulatoren sowie ein Verfahren zur Behandlung von Lithium-Ionen-Akkumulatoren.

Ein Lithium-Ionen-Akkumulator ist der Oberbegriff für einen Akkumulator auf Basis von Lithium-Verbindungen. Solche Lithium-Ionen-Akkumulatoren werden auch als Lithium-Ionen-Akku oder Lithium-Ionen-Batterie bezeichnet. Aufgrund ihrer hohen spezifischen Energie werden Lithium-Ionen-Akkumulatoren heutzutage für die elektrische Stromversorgung verschiedenster Geräte verwendet, beispielsweise für Smartphones, elektrische Werkzeuge, elektrische Gartengeräte, Elektroroller, Elektrofahrräder, Elektrogabelstapler, Elektroautos, stationäre Speicher oder weitere Anwendungen im Bereich der Elektromobilität.

Nach Ablauf der Einsatzdauer von Lithium-Ionen-Akkumulatoren ist es aus ökologischen und ökonomischen Gründen empfehlenswert, zahlreiche der in Lithium-Ionen-Akkumulatoren vorhandenen Rohstoffe, wie beispielsweise Lithium, Kobalt, Mangan, Nickel, Zink, Aluminium oder Kupfer, zurückzugewinnen. Gleiches gilt für Abfallmaterial aus der Fertigung von Lithium-Ionen-Akkumulatoren. Gemäß gesetzlicher Vorschriften besteht teilweise auch die Pflicht, dass Lithium-Ionen-Akkumulatoren vom Hersteller oder Vertreiber der Lithium-Ionen-Akkumulatoren zurückgenommen werden, um die darin enthaltenen Rohstoffe verwerten zu können.

Um die in Lithium-Ionen-Akkumulatoren vorhandenen Rohstoffe zurückgewinnen und verwerten zu können, ist eine vorherige Behandlung von Lithium-Ionen-Akkumulatoren notwendig. Eine solche Behandlung erfolgt üblicherweise in hierfür speziell ausgerichteten industriellen Anlagen. Um Lithium-Ionen-Akkumulatoren in solchen Anlagen für eine Rückgewinnung der darin vorhandenen Rohstoffe zu behandeln, werden Lithium-Ionen-Akkumulatoren zunächst von Unternehmen und Einrichtungen gesammelt und anschließend chargenweise zu den Anlagen transportiert, um die Lithium-Ionen-Akkumulatoren in diesen Anlagen behandeln zu lassen. Eine solcher Transport ist jedoch hohen Kosten verbunden. Ferner stellt ein solcher Transport von Lithium-Ionen-Akkumulatoren aufgrund der hohen Brand- und Entzündungsgefahr von Lithium-Ionen-Akkumulatoren ein Sicherheitsrisiko dar. Aus diesem Grund gilt beispielsweise gemäß dem "Europäischen Übereinkommen über die internationale Beförderung gefährlicher Güter auf der Straße" (ADR) jeder Transport von Lithium-Ionen-Akkumulatoren als Gefahrguttransport, für den besondere Sicherheitsvorschriften gelten.

EP 3 517 641 offenbart eine Vorrichtung zur Behandlung von Lithium-Ionen-Akkumulatoren bei der Zerkleinerungsgut chemisch aufgeschlossen wird.

Der Erfindung liegt die Aufgabe zugrunde, eine Vorrichtung zur Behandlung von Lithium-Ionen-Akkumulatoren zur Verfügung zu stellen, insbesondere um diese derart behandeln zu können, dass die in den Lithium-Ionen-Akkumulatoren vorhandenen Stoffe anschließend zurückgewonnen werden können, durch die sich solche Transporte von Lithium-Ionen-Akkumulatoren reduzieren lassen.

Insbesondere liegt der Erfindung die Aufgabe zugrunde, eine mobile Vorrichtung zur Behandlung von Lithium-Ionen-Akkumulatoren zur Verfügung zu stellen. Dabei geht die Erfindung von der Grundüberlegung aus, Transporte von Lithium-Ionen-Akkumulatoren zu Vorrichtungen zur Behandlung von Lithium-Ionen-Akkumulatoren dadurch zu reduzieren, dass nicht die Lithium-Ionen-Akkumulatoren zur Vorrichtung, sondern vielmehr die Vorrichtung zu den Lithium-Ionen-Akkumulatoren transportiert wird, um die Lithium-Ionen-Akkumulatoren durch die Vorrichtung zu behandeln. Die Aufgabe der Erfindung besteht daher insbesondere auch darin, eine Vorrichtung zur Behandlung von Lithium-Ionen-Akkumulatoren zur Verfügung zu stellen, die mobil ist, so dass die Vorrichtung zu den Lithium-Ionen-Akkumulatoren transportiert werden kann.

Zur Lösung dieser Aufgaben wird erfindungsgemäß zur Verfügung gestellt eine mobile Vorrichtung zur Behandlung von Lithium-Ionen-Akkumulatoren, die die folgenden Merkmale umfasst:
Eine Eingabekammer, wobei Lithium-Ionen-Akkumulatoren in der Eingabekammer aufnehmbar sind;
eine Zerkleinerungsvorrichtung, wobei die in die Eingabekammer aufgenommenen Lithium-Ionen-Akkumulatoren von der Eingabekammer zu der Zerkleinerungsvorrichtung förderbar sind und die zu der Zerkleinerungsvorrichtung geförderten Lithium-Ionen-Akkumulatoren durch die Zerkleinerungsvorrichtung zerkleinerbar sind;
ein Eintragszwischenbehältnis, wobei die von der Zerkleinerungsvorrichtung zerkleinerten Lithium-Ionen-Akkumulatoren von der Zerkleinerungsvorrichtung zu dem Eintragszwischenbehältnis förderbar und die zu dem Eintragszwischenbehältnis geförderten, zerkleinerten Lithium-Ionen-Akkumulatoren in dem Eintragszwischenbehältnis aufnehmbar sind;
einen Drehrohrofen, wobei die in dem Eintragszwischenbehältnis aufgenommenen, zerkleinerten Lithium-Ionen-Akkumulatoren von dem Eintragszwischenbehältnis in den Drehrohrofen förderbar sind, der Drehrohrofen elektrisch beheizbar ist und die in den Drehrohrofen geförderten, zerkleinerten Lithium-Ionen-Akkumulatoren durch den Drehrohrofen thermisch behandelbar sind; und
eine Austragsfördereinrichtung, wobei die in dem Drehrohrofen thermisch behandelten, zerkleinerten Lithium-Ionen-Akkumulatoren durch die Austragsfördereinrichtung aus dem Drehrohrofen förderbar sind.

Die Erfindung beruht auf der Grundidee, eine Vorrichtung zur Behandlung von Lithium-Ionen-Akkumulatoren zur Verfügung zu stellen, durch welche Lithium-Ionen-Akkumulatoren zum einen derart behandelbar sind, dass in Lithium-Ionen-Akkumulatoren vorhandene Rohstoffe nach der Behandlung rückgewonnen werden können, die Vorrichtung gleichzeitig jedoch derart konzipiert ist, dass diese mobil ist. Sämtliche Komponenten der Vorrichtung können daher derart ausgebildet sein und miteinander zusammenwirken, dass die Vorrichtung insgesamt mobil ist, also in ihrer Gesamtheit transportierbar ist.

Durch diese Mobilität beziehungsweise Transportierbarkeit der Vorrichtung kann diese zur Gänze transportiert werden. Beispielsweise kann die Vorrichtung dorthin transportiert werden, wo zu behandelnde Lithium-Ionen-Akkumulatoren gesammelt sind, so dass diese ohne einen Transport durch die erfindungsgemäße Vorrichtung behandelbar sind.

Bevorzugt ist die erfindungsgemäße mobile Vorrichtung derart konzipiert, dass diese in ihrer funktionellen Anordnung, also ohne die Vorrichtung zu einem Transport auseinanderbauen zu müssen, mobil beziehungsweise transportierbar ist.

Nach einer bevorzugten Ausführungsform ist die mobile Vorrichtung in wenigstens einem mobilen Container angeordnet, so dass die erfindungsgemäße Vorrichtung durch die Mobilität beziehungsweise Transportierbarkeit des wenigstens einen Containers mobil gestaltet ist. Beispielsweise kann die Vorrichtung in zwei oder mehr Containern angeordnet sein, wobei diese Container beispielsweise derart miteinander koppelbar sind, dass sich bei miteinander gekoppelten Container die erfindungsgemäße Vorrichtung ergibt.

Nach einer besonders bevorzugten Ausführungsform ist die erfindungsgemäße Vorrichtung ausschließlich mit elektrischem Strom betreibbar. Mit anderen Worten benötigt die erfindungsgemäße Vorrichtung zu ihrer Funktionalität damit ausschließlich eine Versorgung mit elektrischem Strom und keine weitere Versorgung, wie beispielsweise eine Versorgung mit Gas, Öl oder Wasser.

Bevorzugt sind sämtliche Komponenten der erfindungsgemäßen Vorrichtung daher derart konzipiert, dass diese durch elektrischen Strom betreibbar sind.

Um die durch die erfindungsgemäße Vorrichtung zu behandelnden Lithium-Ionen-Akkumulatoren in die Vorrichtung eingeben zu können, weist die erfindungsgemäße Vorrichtung eine Eingabekammer auf. Durch die erfindungsgemäße Vorrichtung zu behandelnde Lithiumlonen-Akkumulatoren sind in diese Eingabekammer aufnehmbar. Um die Lithium-Ionen-Akkumulatoren in die Eingabekammer eingeben zu können, weist die Eingabekammer bevorzugt eine Eingabeöffnung auf, durch die Lithium-Ionen-Akkumulatoren in die Eingabekammer eingebbar sind. Nach einer bevorzugten Ausführungsform ist in der Eingabekammer eine Inertgasatmosphäre einstellbar. Die Einstellbarkeit einer solchen Inertgasatmosphäre in der Eingabekammer hat insbesondere den Vorteil, dass hierdurch verhindert werden kann, dass durch die Eingabekammer reaktive Gase in die der Eingabekammer nachgeschalteten Komponenten der erfindungsgemäßen Vorrichtung gelangen können. Bevorzugt ist in der Eingabekammer eine Inertgasatmosphäre auf Basis von Stickstoff einstellbar. Bevorzugt ist vorgesehen, dass die Eingabekammer gasdicht verschließbar ist. Hierdurch kann verhindert werden, dass reaktive Gase in die Eingabekammer gelangen, wenn in dieser eine Inertgasatmosphäre eingestellt ist. Bevorzugt weist die Eingabekammer einen Gaseinlass zur Einleitung von Inertgas in die Eingabekammer auf. Bevorzugt ist vorgesehen, dass die Eingabekammer eine Öffnung aufweist, über die in die Eingabekammer aufgenommene Lithium-Ionen-Akkumulatoren in die der Eingabekammer nachgeschaltete Zerkleinerungsvorrichtung förderbar sind. Bevorzugt ist diese Ausgabeöffnung gasdicht verschließbar.

Der Eingabekammer ist in Prozessrichtung eine Zerkleinerungsvorrichtung nachgeschaltet. In die Eingabekammer aufgenommene Lithium-Ionen-Akkumulatoren sind von der Eingabekammer zu der Zerkleinerungsvorrichtung förderbar. Nach einer bevorzugten Ausführungsform sind die in die Eingabekammer aufgenommenen Lithium-Ionen-Akkumulatoren mittels Schwerkraft von der Eingabekammer zu der Zerkleinerungsvorrichtung förderbar. Dies hat insbesondere auch den Vorteil, dass für die Förderung der Lithium-Ionen-Akkumulatoren von der Eingabekammer zu der Zerkleinerungsvorrichtung kein separates Förderaggregat notwendig ist, was eine zusätzliche Kompaktheit der Vorrichtung ermöglicht und damit der Mobilität der Vorrichtung förderlich ist. Soweit die Eingabekammer, wie zuvor ausgeführt, eine verschließbare Ausgabeöffnung aufweist, können die in die Eingabekammer aufgenommenen Lithium-Ionen-Akkumulatoren durch Öffnen der Ausgabeöffnung mittels Schwerkraft von der Eingabekammer zu der Zerkleinerungsvorrichtung förderbar sein. Nach einer bevorzugten Ausführungsform ist die Zerkleinerungsvorrichtung unterhalb der Eingabekammer angeordnet, wodurch die Lithium-Ionen-Akkumulatoren besonders einfach mittels Schwerkraft von der Eingabekammer zu der Zerkleinerungsvorrichtung förderbar sind.

Nach einer Ausführungsform ist vorgesehen, dass die Lithium-Ionen-Akkumulatoren durch die Zerkleinerungsvorrichtung auf eine Partikelgröße zerkleinerbar sind, wonach wenigstens 90 Masse-% der durch die Zerkleinerungsvorrichtung zerkleinerten Lithium-Ionen-Akkumulatoren eine Partikelgröße von maximal 20 mm aufweisen, besonders bevorzugt von maximal 15 mm aufweisen. Wie nachfolgend weiter ausgeführt, sind die Lithium-Ionen-Akkumulatoren in dem Drehrohrofen bevorzugt derart thermisch behandelbar, dass diese zumindest teilweise pyrolytisch zersetzt werden. Erfindungsgemäß wurde nun festgestellt, dass eine ausreichende pyrolytische Zersetzung nicht oder nicht regelmäßig erreichbar ist, wenn die Lithium-Ionen-Akkumulatoren auf eine Partikelgröße von über 20 mm oder auch nur von über 15 mm zerkleinert werden. Erfindungsgemäß ist daher, wie vorstehend aufgeführt, bevorzugt vorgesehen, dass die Lithium-Ionen-Akkumulatoren durch die Zerkleinerungsvorrichtung überwiegend auf eine Partikelgröße unterhalb dieser kritischen Größe zerkleinert werden.

Die Partikelgröße der zerkleinerten Lithium-Ionen-Akkumulatoren kann bevorzugt mittels einer Siebanalyse gemessen werden.

Nach einer bevorzugten Ausführungsform umfasst die Zerkleinerungsvorrichtung einen Einwellen-Schredder. Einwellen-Schredder, die auch als Einwellen-Zerkleinerer bezeichnet werden, sind aus dem Stand der Technik bekannt. Einwellen-Schredder umfassen in der Regel eine drehbare Welle, an der umfangsseitig Rotormesser angeordnet sind. Zwischen der Welle und einer Kante, an der Gegenmesser angeordnet sind, ist ein Schneidspalt ausgebildet. Durch Rotation der Welle werden Komponenten im Schneidspalt zerkleinert, indem sie zwischen den Rotormessern und den Gegenmessern im Schneidspalt zerschnitten werden. Erfindungsgemäß hat sich überraschend herausgestellt, dass Lithium-Ionen-Akkumulatoren besonders vorteilhaft mittels eines solchen Einwellen-Schredders zerkleinert werden können, und zwar insbesondere auch auf Partikelgrößen von maximal 20 mm oder von maximal 15 mm. Ferner hat sich erfindungsgemäß überraschend herausgestellt, dass eine solche Zerkleinerung auf maximal 20 mm oder 15 mm durch zahlreiche andere auf dem Markt befindliche Zerkleinerungsaggregate, beispielsweise Zweiwellen-Schredder, nicht erreichbar sein kann. Dies gilt insbesondere für die Zerkleinerung der in Lithium-Ionen-Akkumulatoren regelmäßig vorhandenen Polymerfolien. Nach einer bevorzugten Ausführungsform ist vorgesehen, dass die Zerkleinerungsvorrichtung einen Einwellen-Schredder und einen Stempel umfasst. Durch den Stempel sind die Lithium-Ionen-Akkumulatoren gegen den Einwellen-Schredder beziehungsweise den Schneidspalt des Einwellen-Schredders führbar. Hierdurch kann in besonders zuverlässiger Weise eine optimale Zerkleinerung der Lithium-Ionen-Akkumulatoren, insbesondere auf die vorbezeichnete Partikelgröße, erreicht werden. Bevorzugt ist der Stempel hydraulisch antreibbar.

Die erfindungsgemäße mobile Vorrichtung weist ein der Zerkleinerungsvorrichtung in Prozessrichtung nachgeschaltetes Eintragszwischenbehältnis auf. Das Eintragszwischenbehältnis ist ein Behältnis, in das die von der Zerkleinerungsvorrichtung zerkleinerten Lithium-Ionen-Akkumulatoren aufnehmbar sind, bevor die zerkleinerten Lithium-Ionen-Akkumulatoren in den Drehrohrofen eingeleitet werden. Das Eintragszwischenbehältnis dient damit insbesondere auch als Puffer für die zerkleinerten Lithium-Ionen-Akkumulatoren zwischen der Zerkleinerungsvorrichtung und dem Drehrohrofen. Diese Wirkung des Eintragszwischenbehältnisses als Puffer hat insbesondere auch den Vorteil, dass die erfindungsgemäße mobile Vorrichtung kontinuierlich betrieben werden kann, auch wenn diese nur diskontinuierlich beziehungsweise chargenweise mit Lithium-Ionen-Akkumulatoren beschickt beziehungsweise die Lithium-Ionen-Akkumulatoren nur chargenweise in die Eingabekammer eingegeben werden.

Nach einer bevorzugten Ausführungsform ist vorgesehen, dass die von der Zerkleinerungsvorrichtung zerkleinerten Lithium-Ionen-Akkumulatoren mittels Schwerkraft von der Zerkleinerungsvorrichtung zu dem Eintragszwischenbehältnis förderbar sind. Eine solche Förderung mittels Schwerkraft hat insbesondere auch den Vorteil, dass auf eine gesonderte Fördereinrichtung, durch die die zerkleinerten Lithium-Ionen-Akkumulatoren von der Zerkleinerungsvorrichtung zu dem Eintragszwischenbehältnis förderbar sind, verzichtet werden kann. Dies hat insbesondere auch den Vorteil einer zusätzlichen Kompaktheit und damit verbesserten Mobilität der erfindungsgemäßen Vorrichtung. Bevorzugt ist das Eintragszwischenbehältnis unterhalb der Zerkleinerungsvorrichtung angeordnet, so dass die zerkleinerten Lithium-Ionen-Akkumulatoren besonders einfach mittels Schwerkraft von der Zerkleinerungsvorrichtung in das Eintragszwischenbehältnis förderbar sind.

Es hat sich als vorteilhaft erwiesen, wenn durch das Eintragszwischenbehältnis wenigstens 100 Liter, besonders bevorzugt wenigstens150 Liter zerkleinerter Lithium-Ionen-Akkumulatoren aufnehmbar sind.

Der Drehrohrofen der erfindungsgemäßen Vorrichtung kann im Wesentlichen wie ein Drehrohrofen nach dem Stand der Technik gestaltet sein. Bevorzugt umfasst der Drehrohrofen ein um seine Längsachse drehbar gelagertes Drehrohr, wobei die Längsachse zur Horizontalen geneigt ist. Als erfindungsgemäß vorteilhaft hat sich eine Neigung im Bereich zwischen 0 und 3°, besonders vorteilhaft zwischen 1 und 3° herausgestellt. Im Inneren des Drehrohres ist der Brennraum ausgebildet, in dem darin befindliches Brenngut thermisch behandelbar ist. Durch eine Drehung des Drehrohres um die Längsachse wird das Brenngut aufgrund der Neigung der Längsachse selbsttätig vom höheren Ende des Drehrohres zum unteren Ende des Drehrohres bewegt. Im Drehrohrofen thermisch zu behandelndes Brenngut wird daher am oberen Ende des Drehrohres, dem Ofeneinlass, zum unteren Ende des Drehrohres, dem Ofenauslass, bewegt. Am Ofeneinlass wird Brenngut in das Drehrohr eingegeben und am Ofenauslass aus dem Drehrohr ausgeleitet.

Nach einer bevorzugten Ausführungsform kann vorgesehen sein, dass das Drehrohr eine innenliegende Wendel aufweist. Erfindungsgemäß hat sich herausgestellt, dass die zerkleinerten Lithium-Ionen-Akkumulatoren hierdurch während ihrer thermischen Behandlung besonders vorteilhaft durch das Drehrohr gefördert werden können.

Nach einer bevorzugten Ausführungsform kann vorgesehen sein, dass das Drehrohr in den Brennraum ragende Leitbleche aufweist. Erfindungsgemäß wurde festgestellt, dass die zerkleinerten Lithium-Ionen-Akkumulatoren durch diese Leitbleche besonders vorteilhaft durchmischt und Wärme besonders gut auf diese übertragen werden kann.

Bei der erfindungsgemäßen Vorrichtung sind die in den Drehrohrofen geförderten, zerkleinerten Lithium-Ionen-Akkumulatoren bevorzugt derart durch den Drehrohrofen thermisch behandelbar, dass eine zumindest teilweise pyrolytische Zersetzung der Lithium-Ionen-Akkumulatoren stattfindet. Bei einer solchen pyrolytischen Zersetzung, die auch als Pyrolyse bezeichnet wird, findet bekanntermaßen eine thermo-chemische Umwandlung statt, bei der organische Materialien unter weitgehendem Ausschluss von Sauerstoff gespalten werden. Bevorzugt findet die thermische Behandlung im Drehrohrofen in einer Inertgasatmosphäre statt, wozu bevorzugt im Drehrohrofen eine Inertgasatmosphäre einstellbar ist. Bevorzugt ist eine Inertgasatmosphäre auf Basis von Stickstoff einstellbar. Zur Einstellung einer solchen Inertgasatmosphäre ist bevorzugt ein Inertgas in den Drehrohrofen einleitbar. Bevorzugt weist der Drehrohrofen hierzu einen Gaseinlass auf, über den Inertgas in den Drehrohrofen einleitbar ist. Bevorzugt weist der Drehrohrofen einen solchen Gaseinlass im Bereich des Ofeneinlasses auf, also in dem Bereich, in dem Brenngut in den Drehrohrofen einführbar ist.

Bevorzugt weist der Drehrohrofen einen Gasauslass auf, über den Brenngas (Prozessgas) aus dem Drehrohrofen ausleitbar ist. Dieses Brenngas umfasst insbesondere auch das im Drehrohrofen befindliche Inertgas sowie Pyrolysegase, die sich während der thermischen Behandlung der Lithium-Ionen-Akkumulatoren im Drehrohrofen gebildet haben. Das aus dem Drehrohrofen ausgeleitete Brenngas ist bevorzugt einer Nachbehandlung zuführbar. Insbesondere kann eine thermische Nachbehandlung der Brenngase vorgesehen sein, um insbesondere schädliche Komponenten im Brenngas unschädlich zu machen.

Bevorzugt ist im Drehrohrofen, also im Drehrohr beziehungsweise im Brennraum des Drehrohres, eine Temperatur im Bereich zwischen 250°C und 650°C einstellbar. Erfindungsgemäß hat sich herausgestellt, dass eine vollständige Pyrolyse der im Drehrohrofen behandelbaren Lithium-Ionen-Akkumulatoren nicht gewährleistet ist, wenn die Temperatur unter 250°C liegt. Ferner hat sich erfindungsgemäß herausgestellt, dass es zu einer ungewünschten Teilschmelze von Komponenten der Lithium-Ionen-Akkumulatoren im Drehrohrofen kommen kann, wenn die Temperatur 650°C übersteigt. Besonders bevorzugt ist der Drehrohrofen auf eine Temperatur im Bereich zwischen 500°C und 550°C einstellbar. Bevorzugt werden die Lithium-Ionen-Akkumulatoren für eine Dauer im Bereich von 10 bis 150 Minuten im Drehrohrofen thermisch behandelt.

Nach einer besonders bevorzugten Ausführungsform ist als Drehrohrofen ein indirekt beheizbarer Drehrohrofen vorgesehen. Bekanntermaßen wird bei einem indirekt beheizten Drehrohrofen die Wärme außerhalb des Drehrohrofens erzeugt und über das Drehrohr in den Brennraum innerhalb des Drehrohres übertragen. Erfindungsgemäß hat sich herausgestellt, dass es bei einem direkt beheizten Drehrohrofen, bei dem die Wärme innerhalb des Drehrohres insbesondere durch Gasbrenner erzeugt wird, zu ungewünschten Schmelzerscheinungen der Lithium-Ionen-Akkumulatoren im Drehrohr kommen kann, wodurch der Drehrohrofen verstopft oder die thermische Behandlung der Lithium-Ionen-Akkumulatoren erschwert werden kann. Durch die Verwendung eines indirekt beheizten Drehrohrofens ergibt sich jedoch eine besonders schonende thermische Behandlung der Lithium-Ionen-Akkumulatoren im Brennraum, wodurch solche Schmelzreaktionen unterdrückt werden können. Besonders bevorzugt ist ein elektrisch indirekt beheizbarer Drehrohrofen vorgesehen, wobei die elektrische Beheizung bevorzugt durch elektrische Heizelemente oder Heizstäbe erfolgt, besonders bevorzugt durch Siliziumkarbid-Heizstäbe, die bevorzugt außerhalb des Drehrohres angeordnet sind. Wie aus dem Stand der Technik bekannt, kann ein solch indirekt elektrisch beheizbarer Drehrohrofen eine nach außen isolierte Heizmuffel umfassen, wobei die Heizstäbe oder Heizelemente im Raum zwischen dem Drehrohr und der Heizmuffel angeordnet sein können.

Ein besonderer erfindungsgemäßer Vorteil eines solch indirekt elektrisch beheizbaren Drehrohrofens liegt insbesondere auch darin, dass dieser für einen Betrieb allein an eine elektrische Stromversorgung angeschlossen werden muss. Eine zusätzliche Versorgung, beispielsweise von Gas oder Öl, ist nicht notwendig. Hierdurch kann insbesondere auch ein erfindungsgemäßes Ziel, die erfindungsgemäße Vorrichtung allein über eine externe elektrische Stromversorgung zu betreiben, erreicht werden.

Der Drehrohrofen arbeitet bevorzugt im Gleichstromprinzip. Insoweit ist der Drehrohrofen bevorzugt derart eingerichtet, dass die im Drehrohrofen thermisch behandelten Lithium-Ionen-Akkumulatoren und die Ofengase von der Einlassseite zur Auslassseite des Drehrohrofens beziehungsweise durch den durch das Drehrohr definierten Brennraum geführt werden.

Nach einer bevorzugten Ausführungsform ist vorgesehen, dass die erfindungsgemäße mobile Vorrichtung ferner eine Eintragsfördereinrichtung umfasst, wobei die in dem Eintragszwischenbehältnis aufgenommenen Lithium-Ionen-Akkumulatoren durch die Eintragsfördereinrichtung aus dem Eintragszwischenbehältnis in den Drehrohrofen förderbar sind. Die Eintragsfördereinrichtung ist demnach derart ausgebildet, dass durch diese die in dem Eintragszwischenbehältnis, beziehungsweise Puffer, aufgenommenen, zerkleinerten Lithiumlonen-Akkumulatoren durch die Eintragsfördereinrichtung von dem Eintragszwischenbehältnis in den Drehrohrofen gefördert und dort anschließend thermisch behandelt werden können.

Nach einer besonders bevorzugten Ausführungsform umfasst die Eintragsfördereinrichtung wenigstens zwei Schneckenförderer. Erfindungsgemäß wurde festgestellt, dass die durch die Zerkleinerungsvorrichtung zerkleinerten Lithium-Ionen-Akkumulatoren, insbesondere soweit diese, wie zuvor ausgeführt, überwiegend auf eine Größe von maximal 20 mm oder 15 mm zerkleinert sind, sehr vorteilhaft durch Schneckenförderer transportiert und in den Drehrohrofen gefördert werden können. Nach einer Fortbildung dieses Erfindungsgedankens umfasst die Eintragsfördereinrichtung wenigstens einen ersten Schneckenförderer, durch den die zerkleinerten Lithium-Ionen-Akkumulatoren aus dem Eintragszwischenbehältnis förderbar sind, und einen zweiten Schneckenförderer, durch den die zerkleinerten Lithium-Ionen-Akkumulatoren in den Drehrohrofen förderbar sind. Bevorzugt sind der erste und zweite Schneckenförderer derart ausgebildet, dass die durch den ersten Schneckenförderer geförderten zerkleinerten Lithium-Ionen-Akkumulatoren an den zweiten Schneckenförderer übergebbar sind. Eine wenigstens zwei solche Schneckenförderer umfassende Eintragsfördereinrichtung weist zahlreiche Vorteile auf. Zum einen können zwei solche Schneckenförderer relativ zueinander bewegbar sein, wodurch der zweite Schneckenförderer einfach an eine gewünschte Neigung des Drehrohrofens angepasst werden kann. Zum Weiteren erlaubt dies jedoch auch, den ersten und zweiten Schneckenförderer aus unterschiedlichen Materialien auszubilden. So kann beispielsweise der zweite Schneckenförderer aus hochfestem Stahl ausgebildet sein, der den harschen Bedingungen am Einlass des Drehrohrofens standhält, so dass der zweite Schneckenförderer die zerkleinerten Lithium-Ionen-Akkumulatoren dort in den Drehrohrofen fördern kann. Der erste Schneckenförderer kann jedoch aus einem günstigeren Material, insbesondere einem günstigeren Stahl ausgebildet sein, das keinen solch harschen Bedingungen standzuhalten braucht.

Nach einer bevorzugten Ausführungsform ist vorgesehen, dass der Drehrohrofen ein Drehrohr und ein Einlaufgehäuse umfasst, wobei das Drehrohr gegenüber dem Einlaufgehäuse über eine Polytetrafluorethylen umfassende Dichtung oder eine Karbonringdichtung abgedichtet ist. Das Einlaufgehäuse ist, wie aus dem Stand der Technik bekannt, bevorzugt im Bereich des Ofeneinlasses angeordnet. Entsprechende Einlaufgehäuse sind aus dem Stand der Technik bekannt. Sie dienen der Aufnahme von im Drehrohr thermisch zu behandelndem Brenngut, bevor dieses in das Drehrohr eingeleitet wird. Erfindungsgemäß sind die zerkleinerten Lithium-Ionen-Akkumulatoren bevorzugt durch die Eintragsfördereinrichtung, besonders bevorzugt durch den zweiten Schneckenförderer, in das Einlaufgehäuse förderbar. Anschließend sind die in das Einlaufgehäuse geförderten zerkleinerten Lithium-Ionen-Akkumulatoren in das Drehrohr förderbar und können dort thermisch behandelt werden.

Nach einer bevorzugten Ausführungsform kann vorgesehen sein, dass der Drehrohrofen im Bereich des Einlaufgehäuses eine Kühlvorrichtung umfasst. Eine solche Kühlvorrichtung kann insbesondere derart ausgebildet sein, dass durch diese das Drehrohr im Bereich seines Einlaufgehäuses kühlbar ist. Bevorzugt ist die Kühlvorrichtung derart ausgebildet, dass durch diese das Drehrohr im Bereich seines Einlaufgehäuses durch Gas kühlbar ist, insbesondere durch Luft. Besonders bevorzugt ist vorgesehen, dass die Kühlvorrichtung derart ausgebildet ist, dass durch diese das Drehrohr von außen durch Gas kühlbar ist. Durch eine solche Kühlvorrichtung kann insbesondere auch verhindert werden, dass sich das Polytetrafluorethylen bei höheren Temperaturen thermisch zersetzt.

Nach einer bevorzugten Ausführungsform ist vorgesehen, dass der Drehrohrofen ein Drehrohr und ein Auslaufgehäuse umfasst, wobei das Drehrohr gegenüber dem Auslaufgehäuse über eine Polytetrafluorethylen umfassende Dichtung oder eine Karbonringdichtung abgedichtet ist.

Das Auslaufgehäuse ist, wie aus dem Stand der Technik bekannt, bevorzugt im Bereich des Ofenauslasses angeordnet. Entsprechende Auslaufgehäuse sind aus dem Stand der Technik bekannt. Sie dienen der Aufnahme von im Drehrohr thermisch behandeltem Brenngut, nachdem dieses aus dem Drehrohr ausgeleitet wurde. Dabei wird im Drehrohr thermisch behandeltem Brenngut regelmäßig durch die Drehung des Drehrohres in das Auslaufgehäuse eingeleitet. Eine technische Herausforderung bei Drehrohröfen gemäß dem Stand der Technik ist die Abdichtung des Drehrohrs gegenüber dem Auslaufgehäuse. Denn während das Auslaufgehäuse regelmäßig ortsfest angeordnet ist, ist das Drehrohr drehbar in das Auslaufgehäuse geführt. Erfindungsgemäß wurde nun überraschend festgestellt, dass sich das Drehrohr der erfindungsgemäßen mobilen Vorrichtung sehr vorteilhaft über eine Polytetrafluorethylen umfassende Dichtung gegenüber dem Auslaufgehäuse abdichten lässt.

Wie zuvor ausgeführt, ist im Drehrohrofen bevorzugt eine Inertgasatmosphäre einstellbar. Nach einer Fortbildung dieses Erfindungsgedankens ist bevorzugt auch in den der Eingabekammer in Prozessrichtung nachgeschalteten Komponenten der Vorrichtung eine Inertgasatmosphäre einstellbar. Hierdurch kann verhindert werden, dass von diesen Komponenten aus reaktive Gase in den Drehrohrofen gelangen, wo sie eine Pyrolyse der Lithium-Ionen-Akkumulatoren behindern könnten.

Bei der Austragsfördereinrichtung der erfindungsgemäßen mobilen Vorrichtung kann es sich grundsätzlich um eine beliebige aus dem Stand der Technik bekannte Fördereinrichtung handeln, durch die in einem Drehrohrofen behandeltes Brenngut aus dem Drehrohrofen gefördert werden kann. Nach einer bevorzugten Ausführungsform umfasst die Austragsfördereinrichtung eine Zellenradschleuse. Bevorzugt sind im Drehrohrofen thermisch behandelte Lithium-Ionen-Akkumulatoren, gegebenenfalls über ein wie vorstehend ausgebildetes Auslaufgehäuse, in die Austragsfördereinrichtung beziehungsweise die Zellenradschleuse der Austragsfördereinrichtung förderbar. Bevorzugt sind die Lithium-Ionen-Akkumulatoren mittels Schwerkraft in die Austragsfördereinrichtung, insbesondere in eine Zellenradschleuse der Austragsfördereinrichtung förderbar. Dies macht eine zusätzliche Fördereinrichtung entbehrlich, was der Mobilität der erfindungsgemäßen Vorrichtung förderlich ist.

Nach einer besonders bevorzugten Ausführungsform umfasst die erfindungsgemäße mobile Vorrichtung ferner ein Auslaufzwischenbehältnis, wobei die mittels der Austragsfördereinrichtung aus dem Drehrohrofen geförderten Lithium-Ionen-Akkumulatoren in dem Auslaufzwischenbehältnis aufnehmbar sind. Bei dem Auslaufzwischenbehältnis handelt es sich insoweit wiederum um einen Puffer, in den die mittels der Austragsfördereinrichtung aus dem Drehrohrofen geförderten, thermisch behandelten Lithium-Ionen-Akkumulatoren aufnehmbar sind, bevor sie weiter behandelt beziehungsweise gefördert werden. Dies ermöglicht es wiederum, den Drehrohrofen kontinuierlich zu betreiben, während die aus dem Drehrohrofen geförderten, thermisch behandelten Lithium-Ionen-Akkumulatoren nur diskontinuierlich, also chargenweise weiter behandelt beziehungsweise transportiert werden können.

Nach einer Ausführungsform kann vorgesehen sein, dass die erfindungsgemäße mobile Vorrichtung eine Förderschnecke umfasst, durch die die in dem Auslaufzwischenbehältnis aufgenommenen Lithium-Ionen-Akkumulatoren herausgefördert werden können. Durch die Förderschnecke können die Lithium-Ionen-Akkumulatoren anschließend an eine beliebige Aufnahmeeinrichtung übergeben werden. Nach einer bevorzugten Ausführungsform ist vorgesehen, dass die Förderschnecke gekühlt ist, bevorzugt mittels eines Fluides, beispielsweise in Form von Wasser oder Öl. Bevorzugt ist dabei vorgesehen, dass das Fluid im Kreislauf geführt und nicht verbraucht wird. Die Wärme wird bevorzugt an die Umgebung abgegeben.

Nach einer bevorzugten Ausführungsform kann vorgesehen sein, dass die erfindungsgemäße mobile Vorrichtung eine Einrichtung zur Erzeugung von Inertgas umfasst. Insbesondere kann die erfindungsgemäße Vorrichtung eine solche Einrichtung zur Erzeugung von gasförmigem Stickstoff umfassen. Ein besonderer Vorteil einer solchen Einrichtung zur Erzeugung von Inertgas besteht insbesondere darin, dass die erfindungsgemäße Vorrichtung für ihren Betrieb nicht an eine externe Inertgasversorgung angeschlossen werden muss. Vielmehr ermöglicht es das Vorhandensein einer solchen Einrichtung, dass die erfindungsgemäße Vorrichtung allein durch den Anschluss an eine externe Stromversorgung betrieben werden kann. Bei der Einrichtung zur Erzeugung von Inertgas, insbesondere zur Erzeugung von gasförmigem Stickstoff, kann es sich grundsätzlich um eine beliebige aus dem Stand der Technik bekannte Einrichtung handeln, durch die ein Inertgas, insbesondere gasförmiger Stickstoff, erzeugbar ist. Besonders bevorzugt handelt es sich bei einer solchen Einrichtung um eine solche Einrichtung, die allein mittels des Anschlusses an eine externe Stromversorgung betreibbar ist. Bevorzugt handelt es sich bei der Einrichtung um einen Stickstoffgenerator, besonders bevorzugt um einen Stickstoffgenerator nach dem Druckwechselprinzip mit Kohlenstoff-Molekularsieb. Bevorzugt wird der Stickstoffgenerator von einem Schraubendruckluftkompressor gespeist.

Nach einer Fortbildung des Erfindungsgedankens kann vorgesehen sein, dass die Vorrichtung ferner einen Tank zur Speicherung des durch die Einrichtung zur Erzeugung von Inertgas erzeugten Inertgases umfasst.

Ferner kann nach einer Fortbildung dieses Erfindungsgedankens vorgesehen sein, dass die Vorrichtung Mittel zur Leitung von Inertgas vom Tank zum Drehrohrofen, insbesondere in das Drehrohr des Drehrohrofens, insbesondere zur Einleitung von Inertgas im Bereich des Ofeneinlasses umfasst. Ferner können Mittel zur Leitung von Inertgas vom Tank in die Eingabekammer vorgesehen sein.

Bevorzugt umfasst die erfindungsgemäße mobile Vorrichtung Kontrollmittel, durch die die Vorrichtung steuerbar ist. Bevorzugt umfassen diese Kontrollmittel eine elektronische Datenverarbeitungsvorrichtung, durch die die Vorrichtung steuerbar ist. Insbesondere kann durch die Kontrollmittel der Betrieb sämtlicher Komponenten der Vorrichtung steuerbar beziehungsweise kontrollierbar sein. Insbesondere kann durch die Kontrollmittel der Betrieb des Drehrohrofens, also insbesondere die Temperatur und die Atmosphäre des Drehrohrofens, steuerbar beziehungsweise kontrollierbar sein.

Gegenstand der Erfindung ist auch ein Verfahren zur Behandlung von Lithium-Ionen-Akkumulatoren, welches die folgenden Schritte umfasst:
Zurverfügungstellung einer erfindungsgemäßen mobilen Vorrichtung;
Eingabe von Lithium-Ionen-Akkumulatoren in die Eingabekammer;
Fördern der in die Eingabekammer eingegebenen Lithium-Ionen-Akkumulatoren zu der Zerkleinerungsvorrichtung;
Zerkleinern der Lithium-Ionen-Akkumulatoren durch die Zerkleinerungsvorrichtung;
Fördern der zerkleinerten Lithium-Ionen-Akkumulatoren in das Eintragszwischenbehältnis;
Fördern der in das Eintragszwischenbehältnis geförderten, zerkleinerten Lithium-Ionen-Akkumulatoren in den Drehrohrofen;
thermisches Behandeln der in den Drehrohrofen geförderten, zerkleinerten Lithium-Ionen-Akkumulatoren durch den Drehrohrofen;
Fördern der in dem Drehrohrofen thermisch behandelten, zerkleinerten Lithium-Ionen-Akkumulatoren durch die Austragsfördereinrichtung aus dem Drehrohrofen.

Das erfindungsgemäße Verfahren wird bevorzugt derart durchgeführt, dass durch dieses die Lithium-Ionen-Akkumulatoren wie vorstehend ausgeführt behandelt werden.

Insofern werden die Lithium-Ionen-Akkumulatoren, wie zuvor ausgeführt, bevorzugt derart thermisch durch den Drehrohrofen behandelt, dass eine zumindest teilweise pyrolytische Zersetzung der Lithium-Ionen-Akkumulatoren stattfindet.

Die mittels der erfindungsgemäßen mobilen Vorrichtung, insbesondere durch das erfindungsgemäße Verfahren thermisch behandelten Lithium-Ionen-Akkumulatoren können anschließend derart weiterbehandelt werden, dass aus diesen die vorbezeichneten Rohstoffe zumindest teilweise wieder rückgewonnen werden können.

Weitere Merkmale der Erfindung ergeben sich aus den Ansprüchen, den Figuren sowie der nachfolgenden, zugehörigen Figurenbeschreibung.

Sämtliche Merkmale der Erfindung können, einzeln oder in Kombination, beliebig miteinander kombiniert sein.

Ein Ausführungsbeispiel der Erfindung wird anhand der beigefügten, stark schematisierten Figuren und der zugehörigen, nachfolgenden Figurenbeschreibung näher erläutert.

In den Figuren zeigt:
- Figur 1: ein schematisiertes Prozessschaubild eines Ausführungsbeispiels der erfindungsgemäßen Vorrichtung und des erfindungsgemäßen Verfahrens; und
- Figur 2: eine Seitenansicht des Ausführungsbeispiels der Vorrichtung gemäß Figur 1.

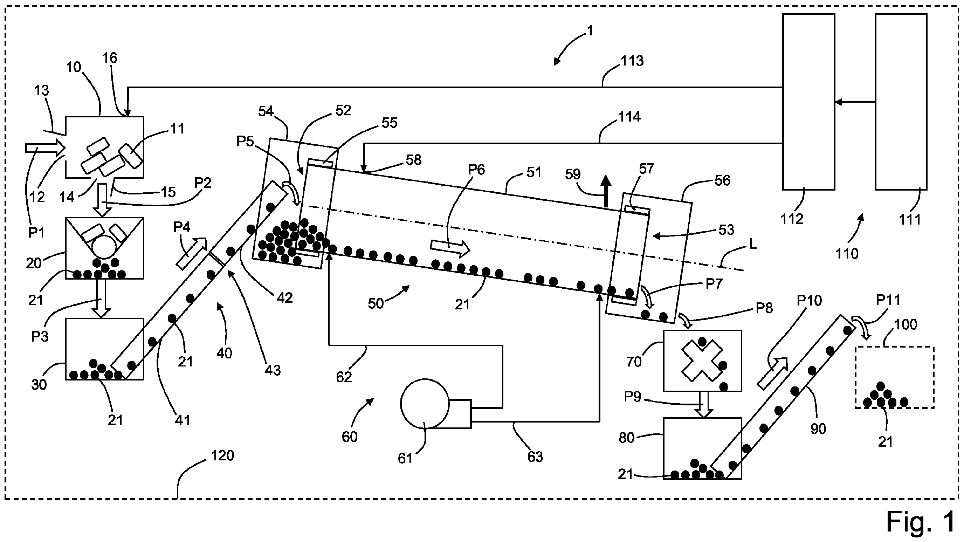

In ihrer Gesamtheit ist die mobile Vorrichtung in Figur 1 mit dem Bezugszeichen 1 gekennzeichnet.

Die Vorrichtung 1 umfasst eine Eingabekammer 10, in die Lithium-Ionen-Akkumulatoren 11 gemäß Pfeil P1 über eine Eingabeöffnung 12 eingegeben werden können. Die Eingabeöffnung 12 ist über eine erste Klappe 13 gasdicht verschließbar. Unterseitig weist die Eingabekammer 10 eine Ausgabeöffnung 14 auf, die über eine zweite Klappe 15 gasdicht verschließbar ist. Die Eingabekammer 10 weist ein Volumen von 250 Litern auf und ist mittels der ersten und zweiten Klappe 13, 15 gasdicht verschließbar. Die Eingabekammer 10 weist einen Gasanschluss 16 zur Einleitung von Inertgas in die Eingabekammer 10 auf. Durch Einleiten von Inertgas mittels des Gasanschlusses 16 ist in der Eingabekammer 10 eine Inertgasatmosphäre einstellbar.

Unterhalb der Eingabekammer 10 ist eine Zerkleinerungsvorrichtung 20 der Vorrichtung 1 angeordnet. Die Anordnung der Zerkleinerungsvorrichtung 20 unterhalb der Eingabekammer 10 ermöglicht es, die Lithium-Ionen-Akkumulatoren mittels Schwerkraft von der Eingabekammer 10 zu der Zerkleinerungsvorrichtung 20 zu fördern. Durch Öffnen der zweiten Klappe 15 der Eingabekammer 10 fallen die in der Eingabekammer 10 befindlichen Lithium-Ionen-Akkumulatoren schwerkraftbedingt in die Zerkleinerungsvorrichtung 20. Bei der Zerkleinerungsvorrichtung 20 handelt es sich um einen Einwellen-Schredder, bei dem zu zerkleinerndes Gut mittels eines hydraulischen Stempels gegen die Welle des Einwellen-Schredders gedrückt wird. Durch den Einwellen-Schredder lassen sich Lithium-Ionen-Akkumulatoren derart zerkleinern, dass diese nahezu vollständig und zu über 90 Masse-% in einer Partikelgröße von maximal 15 mm vorliegen. Der Förderweg der Lithium-Ionen-Akkumulatoren von der Eingabekammer 10 zu der Zerkleinerungsvorrichtung 20 ist durch den Pfeil P2 angedeutet. Die durch die Zerkleinerungsvorrichtung 20 zerkleinerten Lithium-Ionen-Akkumulatoren sind durch schwarze Kreise 21 angedeutet.

Unterhalb der Zerkleinerungsvorrichtung 20 ist ein Eintragszwischenbehältnis 30 angeordnet. Das Eintragszwischenbehältnis 30 ist als einfacher Stahlkasten ausgebildet und dient als Puffer zwischen der in Prozessrichtung vorgeschalteten Eingabekammer 10 und Zerkleinerungsvorrichtung 20 und dem in Prozessrichtung nachgeschalteten Drehrohrofen 50. Die Anordnung des Eintragszwischenbehältnisses 30 unterhalb der Zerkleinerungsvorrichtung 20 ermöglicht es, dass in der Zerkleinerungsvorrichtung 20 zerkleinerte Lithium-Ionen-Akkumulatoren schwerkraftbedingt von der Zerkleinerungsvorrichtung 20 in das Eintragszwischenbehältnis 30 fallen, angedeutet durch den Pfeil P3. Das Eintragszwischenbehältnis 30 weist ein Volumen von etwa 150 Litern auf.

Die mobile Vorrichtung 1 umfasst ferner einen Drehrohrofen 50 und eine Eintragsfördereinrichtung 40, über die in dem Eintragszwischenbehältnis 30 aufgenommene, zerkleinerte Lithium-Ionen-Akkumulatoren von dem Eintragszwischenbehältnis 30 in den Drehrohrofen 50 förderbar sind.

Der Drehrohrofen 50 liegt in Form eines über Siliziumkarbid-Heizstäbe elektrisch indirekt beheizbaren Drehrohrofens 50 vor. Der Drehrohrofen 50 umfasst ein zylindrisches Drehrohr 51, das um die Mittenlängsachse L des Drehrohrs 51 drehbar gelagert ist. Die Mittenlängsachse L ist dabei zur Horizontalen geneigt. Das Drehrohr 51 besteht aus einem nichtrostenden, austenitischen Chrom-Nickel-Molybdän-Stahl mit niedrigem Kohlenstoffgehalt. Das höhere, in Figur 1 linke Ende des Drehrohrs 51 ist der Ofeneinlass 52 des Drehrohrofens 50, über welches die in dem Drehrohrofen 50 thermisch zu behandelnden zerkleinerten Lithium-Ionen-Akkumulatoren in das Drehrohr 51 eintragbar sind. Das tiefere, in Figur 1 rechte Ende des Drehrohrs 51 stellt den Ofenauslass 53 des Drehrohrs 51 dar, über welchen im Drehrohrofen 50 thermisch behandelte Lithium-Ionen-Akkumulatoren wieder aus dem Drehrohr 51 ausleitbar sind. Nach außen ist das Drehrohr 51 durch eine (nicht dargestellte) Heizmuffel isoliert, wobei zwischen dem Drehrohr 51 und der Heizmuffel die Brennstäbe aus Siliziumkarbid (nicht dargestellt) angeordnet sind. Die elektrische Beheizung des Drehrohrs 51 über die Siliziumkarbid-Heizstäbe erfolgt gemäß dem Stand der Technik. Insoweit wird das Drehrohr 51 über die Heizstäbe von außen beheizt, so dass die Wärme über das Drehrohr 51 in den vom Drehrohr 51 umschlossenen Raum geleitet wird. Der vom Drehrohr 51 umschlossene Raum dient damit als Brennraum, in dem die zerkleinerten Lithium-Ionen-Akkumulatoren thermisch behandelbar sind. Über eine Kontrolleinrichtung wird der Drehrohrofen 50 derart gesteuert, dass im Drehrohr 51 eine Temperatur im Bereich von 500 bis 550°C herrscht. Im Bereich des Einlasses 52 weist der Drehrohrofen 50 ein Einlaufgehäuse 54 auf, in das das Drehrohr 51 teilweise hineingeführt ist und gegenüber dem das Drehrohr 51 durch eine Polytetrafluorethylen umfassende Dichtung 55 abgedichtet ist. In gleicher Weise umfasst der Drehrohrofen 50 im Bereich des Auslasses 53 ein Auslaufgehäuse 56, in das das Drehrohr 51 ebenfalls teilweise hineingeführt ist und gegenüber dem das Drehrohr 51 durch eine Polytetrafluorethylen umfassende Dichtung 57 abgedichtet ist. Die Vorrichtung 1 umfasst ferner einen Luftkühler 60, durch den der Drehrohrofen 50 im Bereich des Einlasses 52 und des Auslasses 53 des Drehrohrs 51 kühlbar ist. Hierfür umfasst der Kühler 60 ein Gebläse 61, mittels dessen über eine erste Kühlleitung 62 das Drehrohr 51 von außen im Bereich des Einlasses 52 und mittels einer zweiten Leitung 63 das Drehrohr 51 von außen im Bereich des Auslasses 53 mittels Anblasen durch Luft (Frischluft) kühlbar ist. Hierdurch ist das Drehrohr 51 derart kühlbar, dass die Polytetrafluorethylen umfassenden Dichtungen 55, 57 vor einer thermischen Beschädigung geschützt werden können.

Die Eintragsfördereinrichtung 40 umfasst einen ersten Schneckenförderer 41 und einen zweiten Schneckenförderer 42. Mittels des ersten Schneckenförderers 41 sind im Eintragszwischenbehältnis 30 befindliche, zerkleinerte Lithium-Ionen-Akkumulatoren 21 aus dem Eintragszwischenbehältnis 30 förderbar. An einer Übergabestelle 43 übergibt der erste Schneckenförderer 41 die zerkleinerten Lithium-Ionen-Akkumulatoren 21 an den zweiten Schneckenförderer 42, über den die zerkleinerten Lithium-Ionen-Akkumulatoren 21 schließlich in das Einlaufgehäuse 54 des Drehrohrofens 50 förderbar sind. Die Förderung der zerkleinerten Lithium-Ionen-Akkumulatoren 21 durch den ersten und zweiten Schneckenförderer 41, 42 ist durch den Pfeil P4 und der Eintrag der zerkleinerten Lithium-Ionen-Akkumulatoren 21 vom zweiten Schneckenförderer 42 in das Einlaufgehäuse 54 durch den Pfeil P5 angedeutet.

Durch Rotation des Drehrohrs 51 um die Mittenlängsachse L werden die zerkleinerten Lithium-Ionen-Akkumulatoren 21 vom Einlaufgehäuse 54 in das Drehrohr 51 und entlang der Pfeilrichtung P6 durch dieses hindurch bis zum Auslaufgehäuse 56 transportiert. Während dieses Durchlaufs durch das Drehrohr 51 werden die zerkleinerten Lithium-Ionen-Akkumulatoren 21 derart thermisch behandelt, dass diese pyrolytisch zersetzt werden. Um die für eine solche Pyrolyse notwendige Inertgasatmosphäre im Drehrohr 51 zur Verfügung zu stellen, weist das Drehrohr 51 im Bereich des Einlasses 52 eine Gaszuführung 58 auf, über die Inertgas in das Drehrohr 51 einleitbar ist. Das in das Drehrohr 51 eingeleitete Inertgas durchströmt das Drehrohr 51 in Pfeilrichtung P6 bis in den Bereich des Auslasses 53, wo die Brenngase, angedeutet durch den Pfeil 59, wieder aus dem Drehrohrofen 50 abgezogen werden. Die abgezogenen Brenngase können anschließend durch eine, in den Figuren nicht dargestellte, Brenngasnachbehandlung nachbehandelt werden.

Im Bereich des Auslasses 53 fallen die im Drehrohr 51 pyrolisierten Lithium-Ionen-Akkumulatoren 21 schwerkraftbedingt in das Auslaufgehäuse 56, angedeutet durch den Pfeil P7, und von diesem wiederum schwerkraftbedingt in eine Austragsfördereinrichtung 70 in Form einer Zellenradschleuse. Unterhalb der Zellenradschleuse 70 ist als Puffer ein Auslaufzwischenbehältnis 80 als einfacher Stahlkasten angeordnet. Aufgrund der Anordnung des Auslaufzwischenbehältnisses 80 unterhalb der Zellenradschleuse 70 können die thermisch behandelten Lithium-Ionen-Akkumulatoren 21 schwerkraftbedingt von der Zellenradschleuse 70 in das Auslaufzwischenbehältnis 80 fallen, angedeutet durch den Pfeil P9. Über eine weitere Förderschnecke 90 sind die Lithium-Ionen-Akkumulatoren 21 schließlich entlang der Pfeilrichtung P10 aus dem Auslaufzwischenbehältnis 80 förderbar und in ein Transportbehältnis 100 förderbar, angedeutet durch den Pfeil P11. Die Förderschnecke 90 besitzt eine wassergespeiste Mantelkühlung, so dass die Lithium-Ionen-Akkumulatoren 21 während ihres Transportes durch die Förderschnecke 90 auf eine Temperatur von maximal 60°C heruntergekühlt werden können.

Über das Transportbehältnis 100 können die zerkleinerten, thermisch behandelten Lithiumlonen-Akkumulatoren 21 chargenweise aus der Vorrichtung 1 entnommen und einer weiteren Behandlung zugeführt werden. Diese chargenweise Entnahme wird durch das Auslaufzwischenbehältnis 80 gepuffert.

Die mobile Vorrichtung 1 umfasst ferner eine Einrichtung 110 zur Erzeugung eines Inertgases in Form von gasförmigem Stickstoff. Die Einrichtung 110 umfasst einen Druckluftschraubenkompressor 111, durch den gasförmiger Stickstoff erzeugbar ist. Ferner umfasst die Einrichtung 110 einen Gastank 112, in dem durch den Druckluftschraubenkompressor 111 erzeugtes Stickstoffgas aufnehmbar ist. Vom Gastank 112 ist Stickstoff zum einen mittels einer ersten Inertgasleitung 113 über die Gasöffnung 16 in die Eingabekammer 10 und mittels einer zweiten Inertgasleitung 114 über den Gasanschluss 58 in das Drehrohr 51 einleitbar.

Sämtliche Komponenten der Vorrichtung 1 sind durch elektrischen Strom antreibbar, so dass zum Betrieb der Vorrichtung 1 ausschließlich eine Versorgung mit elektrischem Strom erforderlich ist.

Ferner ist die Vorrichtung 1 insgesamt derart konzipiert, dass sie vollständig in einem Container, angedeutet durch die gestrichelte Linie 120, angeordnet ist. Durch Transport des Containers 120 ist die gesamte Vorrichtung 1 insgesamt transportierbar beziehungsweise mobil gestaltet.

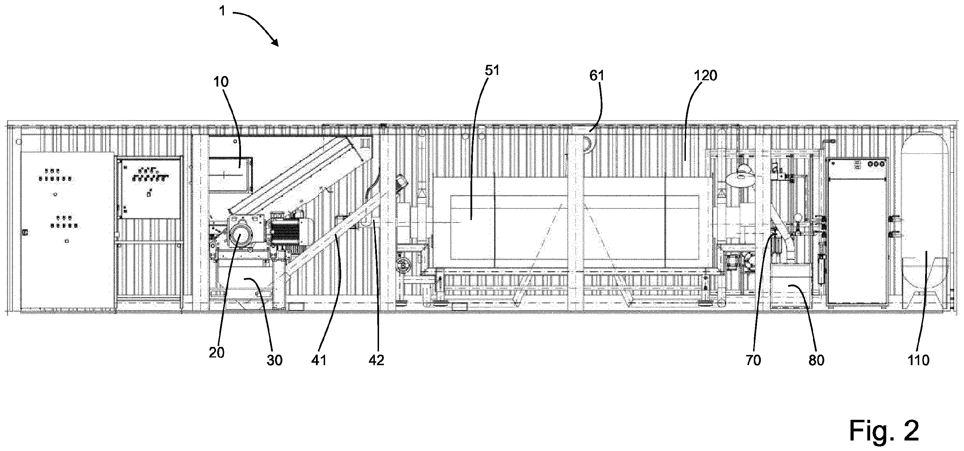

In Figur 2 sind nur einige Elemente der Vorrichtung 1 gemäß Figur 1 mit Bezugszeichen versehen.

## Patentansprüche

1. Mobile Vorrichtung (1) zur Behandlung von Lithium-Ionen-Akkumulatoren, umfassend:
1.1 Eine Eingabekammer (10), wobei
1.1.1 Lithium-Ionen-Akkumulatoren in der Eingabekammer (10) aufnehmbar sind;
1.2 eine Zerkleinerungsvorrichtung (20), wobei
1.2.1 die in die Eingabekammer (10) aufgenommenen Lithium-Ionen-Akkumulatoren von der Eingabekammer (10) zu der Zerkleinerungsvorrichtung (20) förderbar sind und
1.2.2 die zu der Zerkleinerungsvorrichtung (20) geförderten Lithium-Ionen-Akkumulatoren durch die Zerkleinerungsvorrichtung (20) zerkleinerbar sind;
1.3 ein Eintragszwischenbehältnis (30), wobei
1.3.1 die von der Zerkleinerungsvorrichtung (20) zerkleinerten Lithium-Ionen-Akkumulatoren von der Zerkleinerungsvorrichtung (20) zu dem Eintragszwischenbehältnis (30) förderbar und
1.3.2 die zu dem Eintragszwischenbehältnis (30) geförderten, zerkleinerten Lithium-Ionen-Akkumulatoren in dem Eintragszwischenbehältnis (30) aufnehmbar sind;
1.4 einen Drehrohrofen (50), wobei
1.4.1 die in dem Eintragszwischenbehältnis (30) aufgenommenen, zerkleinerten Lithium-Ionen-Akkumulatoren von dem Eintragszwischenbehältnis (30) in den Drehrohrofen (50) förderbar sind,
1.4.2 der Drehrohrofen (50) elektrisch beheizbar ist und
1.4.3 die in den Drehrohrofen (50) geförderten, zerkleinerten Lithium-Ionen-Akkumulatoren durch den Drehrohrofen (50) thermisch behandelbar sind; und
1.5 eine Austragsfördereinrichtung (70), wobei
1.5.1 die in dem Drehrohrofen (50) thermisch behandelten, zerkleinerten Lithium-Ionen-Akkumulatoren durch die Austragsfördereinrichtung (70) aus dem Drehrohrofen (50) förderbar sind.

2. Mobile Vorrichtung (1) nach Anspruch 1, wobei in der Eingabekammer (10) eine Intergasatmosphäre einstellbar ist.

3. Mobile Vorrichtung (1) nach wenigstens einem der vorhergehenden Ansprüche, wobei die in die Eingabekammer (10) aufgenommenen Lithium-Ionen-Akkumulatoren mittels Schwerkraft von der Eingabekammer (10) zu der Zerkleinerungsvorrichtung (20) förderbar sind.

4. Mobile Vorrichtung (1) nach wenigstens einem der vorhergehenden Ansprüche, wobei die Lithium-Ionen-Akkumulatoren durch die Zerkleinerungsvorrichtung (20) auf eine Partikelgröße zerkleinerbar sind, wonach wenigstens 90 Masse-% der durch die Zerkleinerungsvorrichtung (20) zerkleinerten Lithium-Ionen-Akkumulatoren eine Partikelgröße von maximal 20 mm aufweisen.

5. Mobile Vorrichtung (1) nach wenigstens einem der vorhergehenden Ansprüche, wobei die Zerkleinerungsvorrichtung (20) einen Einwellen-Schredder umfasst.

6. Mobile Vorrichtung (1) nach wenigstens einem der vorhergehenden Ansprüche, wobei die von der Zerkleinerungsvorrichtung (20) zerkleinerten Lithium-Ionen-Akkumulatoren mittels Schwerkraft von der Zerkleinerungsvorrichtung (20) zu dem Eintragszwischenbehältnis (30) förderbar sind.

7. Mobile Vorrichtung (1) nach wenigstens einem der vorhergehenden Ansprüche, wobei die in den Drehrohrofen (50) geförderten, zerkleinerten Lithium-Ionen-Akkumulatoren derart durch den Drehrohrofen (50) thermisch behandelbar sind, dass eine zumindest teilweise pyrolytische Zersetzung der Lithium-Ionen-Akkumulatoren stattfindet.

8. Mobile Vorrichtung (1) nach wenigstens einem der vorhergehenden Ansprüche, ferner umfassend eine Eintragsfördereinrichtung (40), wobei die in dem in dem Eintragszwischenbehältnis (30) aufgenommenen Lithium-Ionen-Akkumulatoren durch die Eintragsfördereinrichtung (40) aus dem Eintragszwischenbehältnis (30) in den Drehrohrofen (50) förderbar sind.

9. Mobile Vorrichtung (1) nach Anspruch 8, wobei die Eintragsfördereinrichtung (40) wenigstens zwei Schneckenförderer (41, 42) umfasst.

10. Mobile Vorrichtung (1) nach wenigstens einem der vorhergehenden Ansprüche, wobei der Drehrohrofen (50) ein Drehrohr (51) und ein Einlaufgehäuse (54) umfasst, wobei das Drehrohr (51) gegenüber dem Einlaufgehäuse (54) über eine Polytetrafluorethylen umfassende Dichtung (55) abgedichtet ist.

11. Mobile Vorrichtung (1) nach wenigstens einem der vorhergehenden Ansprüche, wobei der Drehrohrofen (50) ein Drehrohr (51) und ein Auslaufgehäuse (56) umfasst, wobei das Drehrohr (51) gegenüber dem Auslaufgehäuse (56) über eine Polytetrafluorethylen umfassende Dichtung (57) abgedichtet ist.

12. Mobile Vorrichtung (1) nach wenigstens einem der vorhergehenden Ansprüche, ferner umfassend ein Auslaufzwischenbehältnis (80), wobei die mittels der Austragsfördereinrichtung (70), aus dem Drehrohrofen (50) geförderten Lithium-Ionen-Akkumulatoren in dem Auslaufzwischenbehältnis (80) aufnehmbar sind.

13. Mobile Vorrichtung (1) nach wenigstens einem der vorhergehenden Ansprüche, ferner umfassend eine Einrichtung (110) zur Erzeugung eines Intergases.

14. Verfahren zur Behandlung von Lithium-Ionen-Akkumulatoren, umfassend die folgenden Schritte:
A. Zur Verfügungstellung einer mobilen Vorrichtung (1) nach wenigstens einem der vorhergehenden Ansprüche;
B. Eingabe von Lithium-Ionen-Akkumulatoren (11) in die Eingabekammer (10);
C. Fördern der in die Eingabekammer (10) eingegebenen Lithium-Ionen-Akkumulatoren (11) zu der Zerkleinerungsvorrichtung (20);
D. Zerkleinern der Lithium-Ionen-Akkumulatoren (11) durch die Zerkleinerungsvorrichtung (20);
E. Fördern der zerkleinerten Lithium-Ionen-Akkumulatoren (21) in das Eintragszwischenbehältnis (30);
F. Fördern der in das Eintragszwischenbehältnis (30) geförderten, zerkleinerten Lithium-Ionen-Akkumulatoren (21) in den Drehrohrofen (50);
G. thermisches Behandeln der in den Drehrohrofen (50) geförderten, zerkleinerten Lithium-Ionen-Akkumulatoren (21) durch den Drehrohrofen (50);
H. Fördern der in dem Drehrohrofen (50) thermisch behandelten, zerkleinerten Lithium-Ionen-Akkumulatoren (21) durch die Austragsfördereinrichtung (70) aus dem Drehrohrofen (50).

15. Verfahren nach Anspruch 14, wobei die Lithium-Ionen-Akkumulatoren (11) derart thermisch durch den Drehrohrofen (50) behandelt werden, dass eine zumindest teilweise pyrolytische Zersetzung der zerkleinerte Lithium-Ionen-Akkumulatoren (21) stattfindet.

## Claims

1. A mobile device (1) for treating lithium-ion batteries comprising:
1.1 a feed chamber (10), wherein
1.1.1 lithium-ion batteries can be received in the feed chamber (10);
1.2 a comminuting device (20), wherein
1.2.1 the lithium-ion batteries received in the feed chamber (10) can be conveyed from the feed chamber (10) to the comminuting device (20) and
1.2.2 the lithium-ion batteries conveyed to the comminuting device (20) can be comminuted by the comminuting device (20);
1.3 an intermediate input container (30), wherein
1.3.1 the lithium-ion batteries comminuted by the comminuting device (20) can be conveyed from the comminuting device (20) to the intermediate input container (30) and
1.3.2 the comminuted lithium-ion batteries conveyed to the intermediate input container (30) can be received in the intermediate input container (30);
1.4 a rotary kiln (50), wherein
1.4.1 the comminuted lithium-ion batteries received in the intermediate input container (30) can be conveyed from the intermediate input container (30) into the rotary kiln (50),
1.4.2 the rotary kiln (50) can be electrically heated and
1.4.3 the comminuted lithium-ion batteries conveyed into the rotary kiln (50) can be thermally treated by the rotary kiln (50); and
1.5 an output conveying facility (70), wherein
1.5.1 the comminuted lithium-ion batteries thermally treated in the rotary kiln (50) can be conveyed out of the rotary kiln (50) by the output conveying facility (70).

2. The mobile device (1) according to Claim 1, wherein an inert gas atmosphere can be set in the feed chamber (10).

3. The mobile device (1) according to at least one of the preceding claims, wherein the lithium-ion batteries received in the feed chamber (10) can be conveyed from the feed chamber (10) to the comminuting device (20) by means of gravity.

4. The mobile device (1) according to at least one of the preceding claims, wherein the lithium-ion batteries can be comminuted by the comminuting device (20) to a particle size, according to which at least 90% by mass of the lithium-ion batteries comminuted by the comminuting device (20) have a particle size of a maximum of 20 mm.

5. The mobile device (1) according to at least one of the preceding claims, wherein the comminuting device (20) comprises a single-shaft shredder.

6. The mobile device (1) according to at least one of the preceding claims, wherein the lithium-ion batteries comminuted by the comminuting device (20) can be conveyed from the comminuting device (20) to the intermediate input container (30) by means of gravity.

7. The mobile device (1) according to at least one of the preceding claims, wherein the comminuted lithium-ion batteries conveyed into the rotary kiln (50) can be thermally treated by the rotary kiln (50) such that an at least partially pyrolytic decomposition of the lithium-ion batteries takes place.

8. The mobile device (1) according to at least one of the preceding claims, further comprising an input conveying facility (40), wherein the lithium-ion batteries received in the intermediate input container (30) can be conveyed out of the intermediate input container (30) into the rotary kiln (50) by the input conveying facility (40).

9. The mobile device (1) according to Claim 8, wherein the input conveying facility (40) comprises at least two screw conveyors (41, 42).

10. The mobile device (1) according to at least one of the preceding claims, wherein the rotary kiln (50) comprises a rotary tube (51) and an inlet housing (54), wherein the rotary tube (51) is sealed relative to the inlet housing (54) via a seal (55) comprising polytetrafluoroethylene.

11. The mobile device (1) according to at least one of the preceding claims, wherein the rotary kiln (50) comprises a rotary tube (51) and an outlet housing (56), wherein the rotary tube (51) is sealed relative to the outlet housing (56) via a seal (57) comprising polytetrafluoroethylene.

12. The mobile device (1) according to at least one of the preceding claims, further comprising an intermediate outlet container (80), wherein the lithium-ion batteries, which are conveyed out of the rotary kiln (50) by means of the output conveying facility (70), can be received in the intermediate outlet container (80).

13. The mobile device (1) according to at least one of the preceding claims, further comprising a facility (110) for generating an inert gas.

14. A method for treating lithium-ion batteries, comprising the following steps:
A. providing a mobile device (1) according to at least one of the preceding claims;
B. feeding lithium-ion batteries (11) into the feed chamber (10);
C. conveying the lithium-ion batteries (11), which are fed into the feed chamber (10), to the comminuting device (20);
D. comminuting the lithium-ion batteries (11) by means of the comminuting device (20);
E. conveying the comminuted lithium-ion batteries (21) into the intermediate input container (30);
F. conveying the comminuted lithium-ion batteries (21), which are conveyed into the intermediate input container (30), into the rotary kiln (50);
G. thermally treating, by means of the rotary kiln (50), the comminuted lithium-ion batteries (21) which are conveyed into the rotary kiln (50);
H. conveying the comminuted lithium-ion batteries (21), which are thermally treated in the rotary kiln (50), out of the rotary kiln (50) by means of the output conveying device (70).

15. The method according to Claim 14, wherein the lithium-ion batteries (11) are thermally treated by the rotary kiln (50) such that an at least partially pyrolytic decomposition of the comminuted lithium-ion batteries (21) takes place.

## Revendications

1. Dispositif mobile (1) destiné à traiter des batteries lithium-ion, comprenant :
1.1 Une chambre d'entrée (10),
1.1.1 des batteries lithium-ion pouvant être réceptionnées dans la chambre d'entrée (10) ;
1.2 un dispositif de broyage (20),
1.2.1 les batteries lithium-ion réceptionnées dans la chambre d'entrée (10) pouvant être convoyées de la chambre d'entrée (10) vers le dispositif de broyage (20) et
1.2.2 les batteries lithium-ion convoyées vers le dispositif de broyage (20) pouvant être broyées par le dispositif de broyage (20) ;
1.3 un contenant intermédiaire d'introduction (30),
1.3.1 les batteries lithium-ion broyées par le dispositif de broyage (20) pouvant être convoyées du dispositif de broyage (20) vers le contenant intermédiaire d'introduction (30) et
1.3.2 les batteries lithium-ion broyées convoyées vers le contenant intermédiaire d'introduction (30) pouvant être réceptionnées dans le contenant intermédiaire d'introduction (30) ;
1.4 un four tubulaire rotatif (50),
1.4.1 les batteries lithium-ion broyées réceptionnées dans le contenant intermédiaire d'introduction (30) pouvant être convoyées du contenant intermédiaire d'introduction (30) dans le four tubulaire rotatif (50),
1.4.2 le four tubulaire rotatif (50) pouvant être chauffé électriquement et
1.4.3 les batteries lithium-ion broyées convoyées dans le four tubulaire rotatif (50) pouvant être soumises à un traitement thermique par le four tubulaire rotatif (50) et
1.5 un convoyeur d'évacuation (70),
1.5.1 les batteries lithium-ion broyées traitées thermiquement dans le four tubulaire rotatif (50) pouvant être convoyées par le convoyeur d'évacuation (70) hors du four tubulaire rotatif (50).

2. Dispositif mobile (1) selon la revendication 1, une atmosphère intergaz étant réglable dans la chambre d'entrée (10).

3. Dispositif mobile (1) selon au moins l'une quelconque des revendications précédentes, les batteries lithium-ion réceptionnées dans la chambre d'entrée (10) pouvant être convoyées par force de gravité de la chambre d'entrée (10) vers le dispositif de broyage (20).

4. Dispositif mobile (1) selon au moins l'une quelconque des revendications précédentes, les batteries lithium-ion pouvant être broyées par le dispositif de broyage (20) à une taille de particules, suite à quoi, au moins 90 % en masse des batteries lithium-ion broyées par le dispositif de broyage (20) présentent une taille de particules d'un maximum de 20 mm.

5. Dispositif mobile (1) selon au moins l'une quelconque des revendications précédentes, le dispositif de broyage (20) comprenant une déchiqueteuse à un arbre.

6. Dispositif mobile (1) selon au moins l'une quelconque des revendications précédentes, les batteries lithium-ion broyées par le dispositif de broyage (20) pouvant être convoyées par force de gravité du dispositif de broyage (20) vers le contenant intermédiaire d'introduction (30).

7. Dispositif mobile (1) selon au moins l'une quelconque des revendications précédentes, les batteries lithium-ion broyées, convoyées dans le four tubulaire rotatif (50) pouvant être soumises à un traitement thermique dans le four tubulaire rotatif (50), de sorte qu'ait lieu une désintégration par pyrolyse au moins partielle des batteries lithium-ion .

8. Dispositif mobile (1) selon au moins l'une quelconque des revendications précédentes, comprenant par ailleurs un convoyeur d'introduction (40), les batteries lithium-ion réceptionnées dans le contenant intermédiaire d'introduction (30) pouvant être convoyées par le convoyeur d'introduction (40) hors du contenant intermédiaire d'introduction (30) dans le four tubulaire rotatif (50).

9. Dispositif mobile (1) selon la revendication 8, le convoyeur d'introduction (40) comprenant au moins deux convoyeurs à vis (41, 42).

10. Dispositif mobile (1) selon au moins l'une quelconque des revendications précédentes, le four tubulaire rotatif (50) comprenant un tube rotatif (51) et un corps d'entrée (54), le tube rotatif (51) étant étanchéifié par rapport au corps d'entrée (54) par l'intermédiaire d'un joint (55) comprenant un polytétrafluoréthylène.

11. Dispositif mobile (1) selon au moins l'une quelconque des revendications précédentes, le four tubulaire rotatif (50) comprenant un tube rotatif (51) et un corps de sortie (56), le tube rotatif (51) étant étanchéifié par rapport au corps de sortie (56) par l'intermédiaire d'un joint (57) comprenant un polytétrafluoréthylène.

12. Dispositif mobile (1) selon au moins l'une quelconque des revendications précédentes, comprenant par ailleurs un contenant intermédiaire de sortie (80), les batteries lithium-ion convoyées au moyen du convoyeur d'évacuation (70) hors du four tubulaire rotatif (50) pouvant être réceptionnées dans le contenant intermédiaire de sortie (80).

13. Dispositif mobile (1) selon au moins l'une quelconque des revendications précédentes, comprenant par ailleurs un système (110), destiné à générer un intergaz.

14. Procédé destiné à traiter des batteries lithium-ion, comprenant les étapes suivantes, consistant à :
A. Mettre à disposition un dispositif mobile (1) selon au moins l'une quelconque des revendications précédentes ;
B. faire rentrer les batteries lithium-ion (11) dans la chambre d'entrée (10) ;
C. convoyer les batteries lithium-ion (11) rentrées dans la chambre d'entrée (10) vers le dispositif de broyage (20) ;
D. broyer les batteries lithium-ion (11) à l'aide du dispositif de broyage (20);
E. convoyer les batteries lithium-ion (21) broyées dans le contenant intermédiaire d'introduction (30) ;
F. convoyer les batteries lithium-ion (21) broyées convoyées dans le contenant intermédiaire d'introduction (30) dans le four tubulaire rotatif (50) ;
G. soumettre à un traitement thermique les batteries lithium-ion (21) broyées convoyées dans le four tubulaire rotatif (50) à l'aide du four tubulaire rotatif (50) ;
H. convoyer les batteries lithium-ion (21) broyées, traitées thermiquement dans le four tubulaire rotatif (50) à l'aide du convoyeur d'évacuation (70) hors du four tubulaire rotatif (50).

15. Procédé selon la revendication 14, les batteries lithium-ion (11) étant soumises à un traitement thermique par le four tubulaire rotatif (50) de telle sorte qu'ait lieu une désintégration par pyrolyse au moins partielle des batteries lithium-ion (21) broyées.
